(19) Europäisches Patentamt
European Patent Office
Office européen des brevets

(11) EP 2 488 283 B1

(12) EUROPEAN PATENT SPECIFICATION

(45) Date of publication and mention
of the grant of the patent:
**24.12.2014  Bulletin 2014/52**

(51) Int Cl.:
*B01D 53/94* (2006.01)      *B01D 53/56* (2006.01)
*F01N 3/20* (2006.01)

(21) Application number: **10823687.8**

(22) Date of filing: **01.10.2010**

(86) International application number:
**PCT/SE2010/051057**

(87) International publication number:
**WO 2011/046491 (21.04.2011 Gazette 2011/16)**

(54) **ADDITIVE TO UREA SOLUTIONS**

ADDITIV FÜR HARNSTOFFLÖSUNGEN

ADDITIF POUR SOLUTIONS D'URÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **16.10.2009  SE 0901329
21.04.2010  SE 1000404**

(43) Date of publication of application:
**22.08.2012  Bulletin 2012/34**

(73) Proprietor: **PROPPABORT AB
641 92 Katrineholm (SE)**

(72) Inventor: **Sebelius, Sara
136 43 Handen (SE)**

(74) Representative: **Carlsson, Carl Fredrik Munk
Bergenstråhle & Lindvall AB
P.O. Box 17704
118 93 Stockholm (SE)**

(56) References cited:
**CA-A1- 2 679 088      US-A1- 2004 115 110**

**Description**

*Technological Area*

This invention concerns the use of compounds within the class of compounds $C_{x+1}H_{2x+3}(C_2H_4O)_yOH$ as additive to urea solutions for catalytic converters.

*The Standpoint of Technology*

The predominant exhaust after-treatment technique for diesel engines on the market today is the Selective Catalytic Reduction (SCR). In SCR technology, the poisonous nitrogen oxides formed in the engine combustion are transformed into molecular nitrogen and water by reduction. The reducing agent, a 32.5 percent aqueous solution of urea that is kept in a tank connected to the catalytic converter, is injected before the catalytic converter and is subsequently split into ammonia in the catalytic converter. Ammonia reacts with the nitrogen oxides as follows:

$$NO_X + NH_3 \rightarrow N_2 + H_2O$$

However, this technology is not problem-free. Instead of forming ammonia, urea may be transformed into various other products that form hard deposits and lumps which might clog or break the catalytic converter. On the market there are already additives designed to prevent the formation of lumps. These additives, however, are not mixable with the urea solution at room temperature, and therefore a preliminary mixing of the additive and the urea must be done in a factory. Furthermore, the additives currently on the market decompose into products that cause deposits which are difficult to dissolve. The additive in accordance with the invention is mixable with the urea solution at room temperature and does not decompose into products that may cause deposits.

*The Solution of the Problem*

The invention at hand solves the problems of the known technique in accordance with the distinctive features stated in the following request for a patent.

*A Detailed Description of the Invention*

We have discovered that the class of compounds that we define below accelerates the transition from urea into ammonia, thus counteracting the risk of formation of lumps. Laboratory experiments have shown that the addition of only a small amount (<0.1%) of a compound out of this class of compounds to the urea solution nearly eliminates the risk of deposits and the formation of lumps in the catalytic converter. The compounds in this class of compounds are possible to mix with the urea solution at room temperature. This means that the premixing of the additive and the urea solution does not have to be done in a factory but that the additive can be poured directly into the tank where the urea solution is filled. The class of compounds has no negative impact on the environment and neither does it decompose into compounds that might damage the environment or the catalytic converters.
The application for a patent concerns the use of the following class of compounds as additive to urea solutions with the purpose of minimizing deposits and the formations of lumps in the SCR system:

$$C_{x+1}H_{2x+3}(C_2H_4O)_yOH$$

where

$$x = \left| (44y/W - 44y + 17/W - 32) / 14 \right| \qquad x \geq 0$$

$$1 \leq y \leq 20$$

$$0.58 \le W \le 1.0$$

**Experimental Part**

Urea solution 1 was composed of a 32.5 percent aqueous solution of urea (the largest commercial available brand on the market).
Urea solution 2 was composed of a 32.5 percent aqueous solution of urea (another commercial available brand on the market).
Urea solution 3 was composed of the 32.5 percent aqueous solution of urea that is sold premixed with an additive (Diaxol®).
Urea solution 4 was composed of urea solution 1 with <0.1% of an additive of the class $C_{x+1}H_{2x+3}(C_2H_4O)_yOH$. The mixing was done at room temperature.
Urea solution 5 was composed of urea solution 2 with <0.1% of an additive of the class $C_{x+1}H_{2x+3}(C_2H_4O)_yOH$. The mixing was done at room temperature.

The urea solution was injected in a system of 250°C and 350°C (common exhaust temperatures for lump formation). All experiments were repeated twice.

Experiment A

After sixteen hours at 250°C white lumps the size of a decimetre had formed in both the experiments with urea solution 1 and urea solution 2, whereas the experiments with urea solution 3, urea solution 4 and urea solution 5 caused hardly any white deposits. With urea solution 3 insoluble black deposits had formed. Both inorganic and organic solvents were tested. No black deposits were observed for urea solution 4 and urea solution 5.

Experiment B

After sixteen hours at 350°C white lumps the size of a centimetre had formed in both the experiments with urea solution 1 and urea solution 2, whereas the experiments with urea solution 3, urea solution 4 and urea solution 5 caused no white deposits at all. With urea solution 3 insoluble black deposits had formed. The black deposits had begun to form as early as after half an hour. No black deposits were observed for urea solution 4 and urea solution 5.
The ability to reduce the formation of lumps of urea and its decomposition products (the white lumps) was consequently as good for urea solution 4 and urea solution 5 as for urea solution 3. Unique for urea solution 4 and urea solution 5 (urea solutions with additive $C_{x+1}H_{2x+3}(C_2H_4O)_yOH$) was that they (unlike urea solution 3) caused no insoluble black deposits.
We observe the same effect for additives from the class of componds $C_{x+1}H_{2x+3}(C_2H_4O)_yOH$ when y varies between 1 and 20. Neither $C_3H_7(C_2H_4O)_1OH$, $C_6H_{13}(C_2H_4O)_4OH$, $C_9H_{19}(C_2H_4O)_{10}OH$ nor $C_{18}H_{37}(C_2H_4O)_{20}OH$ caused any black deposits, and the white lumps of urea had nearly been eliminated in both experiment A and experiment B.
Comparative experiments have also been carried out with the previously known additives diethylene glycol and polyethylene glycol which show that they do not achieve as high an effect in reducing the formation of white lumps. See below.
When $H(C_2H_4O)_2OH$ (diethylene glycol) and $H(C_2H_4O)_{10}OH$ (polyethylene glycol) are used as additives, urea lumps are formed to a lesser extent than in the experiments without an additive (urea solution 1 and urea solution 2), but the ability to reduce the formation of lumps is not as high as the ability of the additives $C_{x+1}H_{2x+3}(C_2H_4O)_yOH$. When diethylene glycol or polyethylene glycol is used as an additive to urea solution 1 and urea solution 2 and is injected during sixteen hours at 250°C (compare experiment A) white urea lumps are formed that are a third of the size compared to the urea solutions without an additive. At an injection of sixteen hours at 350°C (compare experiment B) white urea lumps are formed half the size compared to the urea solutions without an additive. The formation of lumps is accordingly reduced, but not at all to as high an extent as with additives from the class of compounds $C_{x+1}H_{2x+3}(C_2H_4O)_yOH$.
We have also within our class of componds been able to observe the importance of the length of the carbon chain of the additive. A shorter carbon chain gives an inferior effect to counteract the formation of urea lumps. $CH_3(C_2H_4O)OH$ causes a little more white deposits than $C_3H_7(C_2H_4O)OH$. In the same way $CH_3(C_2H_4O)_2OH$ shows somewhat inferior qualities to $C_4H_9(C_2H_4O)_2OH$, but both $CH_3(C_2H_4O)_2OH$ and $C_4H_9(C_2H_4O)_2OH$ show a better reducing ability toward the formation of white urea lumps than their corresponding ethylene glycols without a carbon chain (diethylene glycol).

**Claims**

1. Use of the class of compounds $C_{x+1}H_{2x+3}(C_2H_4O)_yOH$
   where

$$x = \left| (44y/W - 44y + 17/W - 32) / 14 \right| \qquad x \geq 0$$

$$1 \leq y \leq 20$$

$$0.58 \leq W \leq 1.0$$

as additive to urea solutions for minimizing deposits and the formations of lumps in a selective catalytic reduction system.

**Patentansprüche**

1. Verwendung der Verbindungsklasse $C_{x+1}H_{2x+3}(C_2H_4O)_yOH$
   wobei

$$x = | (44y/W - 44y +17/W -32)/14 | \qquad x \geq 0$$

$$1 \leq y \leq 20$$

$$0,58 \leq W \leq 1,0$$

als Zusatzstoff zu Harnstofflösungen zum Mindern von Ablagerungen und der Bildung von Klumpen in einem selektiven katalytischen Reduktionssystem.

**Revendications**

1. Utilisation de la classe de composants $C_{x+1}H_{2x+3}(C_2H_4O)_yOH$
   où

$$x = \left| (44y/W - 44\,y + 17/W - 32)/14 \right| \qquad\qquad x \geq 0$$

$$1 \leq y \leq 20$$

$$0{,}58 \leq W \leq 1{,}0$$

comme additif à des solutions d'urée pour minimiser des dépôts et les formations de grumeaux dans un système de réduction catalytique sélective.